**Europäisches Patentamt**

(19) **European Patent Office**

**Office européen des brevets**

(11) Numéro de publication: **0 186 561**
**B1**

## (12) FASCICULE DE BREVET EUROPÉEN

(45) Date de publication du fascicule du brevet:
18.05.88

(51) Int. Cl.⁴: **F 23 L 7/00**

(21) Numéro de dépôt: **85402380.1**

(22) Date de dépôt: **03.12.85**

(54) **Procédé d'incinération de déchets à température controlée.**

(30) Priorité: **05.12.84 FR 8418508**

(43) Date de publication de la demande:
**02.07.86 Bulletin 86/27**

(45) Mention de la délivrance du brevet:
**18.05.88 Bulletin 88/20**

(84) Etats contractants désignés:
**AT BE CH DE FR GB IT LI LU NL SE**

(56) Documents cité:
**DE-A-2 404 484**
**DE-A-2 950 526**
**FR-A-1 473 583**
**FR-A-2 293 682**
**FR-A-2 316 542**
**US-A-2 919 980**
**US-A-3 860 384**
**US-A-4 052 138**

**PATENTS ABSTRACTS OF JAPAN, vol. 1, no. 46, 6 mai 1977, page 79 M 77; & JP - A - 52 1 832 (HAIBIRUKA K.K.) 07-01-1977**
**PATENTS ABSTRACTS OF JAPAN, vol. 3, no. 65, 6 juin 1979, page 153 M 61; & JP - A - 54 42 867 (HITACHI ZOSEN K.K.) 05-04-1979**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Guillaume, Paul, 175, rue Hartmann, F-94200 Ivry- sur- Seine (FR)**
Inventeur: **Kayser, Didier, 5, rue du Jura, F-75013 Paris (FR)**
Inventeur: **Propice, Jean, 83, bd du Maréchal Joffre, F-92340 Bourg- La- Reine (FR)**

(74) Mandataire: **Vesin, Jacques, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

## Description

La présente invention concerne un procédé et un appareil pour l'incinération de déchets du type dans lequel on injecte dans le four un comburant et un liquide tel que l'eau.

Un nombre croissant d'établissements industriels ou du secteur tertiaire sont actuellement équipés d'appareils d'incinération de déchets. L'utilisation de tels appareils ou incinérateurs peut répondre à une obligation légale (hôpitaux, abattoirs, etc...) ou à un souci de valorisation énergétique de ces déchets (supermarchés, etc...). Ces appareils doivent permettre une incinération non polluante, rapide et économique.

On trouve actuellement sur le marché plusieurs types d'incinérateurs dont le fonctionnement repose sur des principes différents. Parmi ces appareils, il en existe du type à chargement continu pour le traitement de très grandes quantités de déchets et à chargement discontinu pour le traitement de charges de faible volume: la présente invention concerne des perfectionnements apportés à ce dernier type d'incinérateur. La capacité de traitement de tels appareils ainsi que leur coût de fonctionnement dépendent évidement de la vitesse d'incinération des déchets. Toutefois, lorsque la combustion des déchets se produit trop rapidement, la température du foyer s'élève considérablement ce qui provoque, outre une usure accélérée des réfractaires, une importante pollution à la sortie de l'appareil d'incinération. En effet la théorie et l'expérience montrent que le taux d'oxyde de carbone dans les fumées émises par un incinérateur augmente lorsque la température du foyer augmente.

Il est connu du FR-A-2 316 542 d'introduire de manière continue des déchets dans un four et incinérer ceux-ci, créant ainsi des gaz au-dessus du foyer contenant une quantité importante de monoxyde de carbone. Après la création de ce monohyde de carbone, on injecte de l'air secondaire et de l'eau au contact de ces fumées de manière à provoquer une post-combustion des gaz de fumées et accélérer catalytiquement l'oxydation du CO conformément à la réaction de gaz à l'eau.

Or la demanderesse a constaté qu'un tel procédé appliqué à l'incinération de charges introduites successivement dans l'incinérateur ne permettait pas d'éliminer correctement le monoxyde de carbone ainsi que les suies des fumées qui sortent du four d'incinération. En effet, pour que la réaction de post-combustion des fumées et d'oxydation catalytique du CO se produise, celles-ci doivent être portées à une température de l'ordre de 900°C à 1.000°C, ainsi que cela est mentionné dans le brevet français sus-mentionné.

Par conséquent, dès l'introduction de la charge dans le four, le foyer doit être porté à une température de l'ordre de 900°C à 1.000°C afin que les fumées aient immédiatement cette température et que la réaction puisse avoir lieu. Or, on a constaté par analyse des gaz de fumées qu'en fait, si l'on introduisait les déchets à cette température, on engendrait une quantité de monoxyde de carbone très importante.

La demanderesse pense que la combustion des déchets au niveau du foyer engendre des gaz de pyrolyse du type $C_n H_n$ qui forment un nuage au-dessus de celui-ci, comportant successivement, en partant du foyer, une première couche de gaz contenant essentiellement de l'hydrogène, auquel sont mélangées des suies (particules de carbone), une seconde couche de gaz contenant essentiellement du monoxyde de carbone et de l'hydrogène et une troisième couche de gaz comportant essentiellement un mélange de $CO_2$ et $H_2O$ (gaz de pyrolyse oxydés par l'air) en contact avec l'air du foyer. Cette dernière couche forme une enveloppe autour des seconde et première couches qui ne peuvent s'oxyder dans l'air du four. La technique décrite dans le brevet précité consiste à injecter de l'air dans ce nuage pour tenter d'oxyder les gaz des deuxième et première couches. Mais si l'on veut un contact intime entre l'air et ces gaz, il faut injecter une grande quantité d'air pour créer une turbulence afin de favoriser l'oxydation. On va ainsi abaisser la température des fumées (à moins de préchauffer l'air, ce qui serait particulièrement compliqué). La température du mélange des fumées et de l'air injecté sera alors trop basse pour que la réaction d'oxydation du monoxyde de carbone soit réalisée avec une cinétique suffisante. D'un autre côté, si l'on injecte moins d'air, le brassage ne sera pas assez important et, dans les deux cas, on retrouve des quantités de CO inacceptables en sortie de four.

Si l'on abaissr la température du foyer lorsqu'on introduit les déchets, par exemple aux environs de 600°C à 700°C, la quantité de monoxyde de carbone créée dans la deuxième couche sera moins importante, mais ce monoxyde de carbone ne peut être éliminé correctement par combustion des fumées car la température de ces fumées est insuffisante. Ainsi, bien que l'on engendre moins de monoxyde de carbone, ce dernier se retrouve en quantité inacceptable à la sortie du four.

La demanderesse a pensé qu'il était possible d'introduire les déchets à une température du foyer de l'ordre de 650°C, puis augmenter celle-ci de manière à pouvoir produire ensuite la post-combustion des fumées mais on se retrouve toujours avec des quantités de CO importantes (au départ: température insuffisante des fumées - ensuite: action insuffisante et mal adaptée de la masse d'air injecté). L'adjonction d'eau par une réaction de gaz à l'eau ne change pas notablement les résultats au niveau du taux de monoxyde de carbone dans les fumées en sortie de four.

La demanderesse a donc étudié l'incinération de déchets par charges successives, selon un procédé discontinu d'ouverture de la porte du four, d'introduction de la charge, fermeture de la porte, incinération de la charge, ouverture de la porte, etc...pour lequel se posait le problème de l'élimination du monoxyde de carbone au cours de l'incinération, mais plus particulièrement au début de l'incinération.

Selon l'invention, ce problème est résolu en appliquant un procédé dont les étapes caractéristiques successives sont les suivantes:
- abaisser la température du foyer aux environs de 650°C;
- introduire la charge à incinérer;
- injecter de l'oxygène au moins dans la zone située environ entre la charge et 20 cm au-dessus de celle-ci, de préférence à vitesse sonique, de manière à oxyder immédiatement le carbone et l'hydrogène formés par craquage du gaz de pyrolyse au-dessus de 450°C environ, la présence d'oxygène engendrant très rapidement une montée en température du foyer au-dessus de 750°C, température à partir de laquelle le monoxyde de carbone qui se serait éventuellement formé est immédiatement oxydé sous forme de gaz carbonique, de l'eau étant vaporisée lorsque la température dans le four devient supérieure à 750°C environ, par pulvérisation à l'aide de l'oxygène, de manière, d'une part, à engendrer de l'oxygène actif par craquage thermique et accélérer l'exydation de C, CO et $H_2$ et, d'autre part, à maintenir une température dans le four qui ne devienne pas sensiblement supérieure à environ 850°C, par absorption de chaleur lors de sa vaporisation.

L'injection se fait de préférence à vitesse sonique de manière à créer une zone de turbulences élevées dans ladite zone.

L'oxygène et le liquide peuvent être injectés dans le four pendant un cycle d'incinération, avec un seul et même débit respectif ou bien encore avec plusieurs débits différents successifs.

Généralement, un cycle d'incinération de déchets a une durée t (qui varie souvent en pratique entre 7 min et 21 min), l'injection d'oxygène s'effectuant pendant une durée to, tandis que l'injection de liquide capable de créer un abaissement de température dans la chambre de combustion, s'effectue pendant une durée $t_1$.

Dans tous les cas, la relation suivante est respectée:

$t \geqslant to \geqslant t_1$.

to et $t_1$ représentent des durées globales d'injection d'oxygène et de liquide. Ces injections peuvent être continues, ou discontinues (mode pulsatoire), de débit constant ou variable, la durée et/ou l'amplitude des injections pouvant être asservie, de préférence à une mesure de température et/ou de pression, généralement dans la chambre de combustion.

Le débit d'oxygène peut être constant, si l'on veut simplifier l'installation. Mais il sera généralement variable avec un débit supérieur au début du cycle par rapport au débit en fin de cycle d'incinération, de manière à rapidement remonter la température après l'introduction de la charge à brûler (à température ambiante). La solution la plus simple consiste à avoir un grand débit $D_1$ et un petit débit $d$ d'oxygène, le rapport $D_1/d_1$ variant, de préférence, dans les proportions suivantes:

$1 \leqslant D_1/d_1 \leqslant 3$.

La durée respective de ces deux débits peut être identique. Généralement, on constate qu'il est avantageux, du point de vue de l'amélioration du rapport durée de l'incinération/coût de l'incinération, de faire varier les durées $tD_1$ de grand débit $D_1$ et $td_1$ de petit débit $d_1$ dans les proportion:

$1/3 \leqslant t_{D1}/t_{d1} \leqslant 2$.

Le débit de liquide est généralement d'autant plus imoprtant que la température et/ou la pression dans la chambre de combustion sont élevées. De préférence, on choisira un premier débit $DL_1$ au-dessus d'une température jugée critique Tc, (de l'ordre de 900°C), un second debit $DL_2$ entre la température critique Tc et Tc - environ 50°C et un troisième débit $DL_3$ (faible débit) entre Tc - 50°C et Tc - 150°C, le débit d'eau étant supprimé dans tous les cas, au plus tard lorsque la température est voisine de 750°C dans la chambre de combustion.

De préférence, on respectera les limites suivantes:

$1,1 < DL_1/DL_2 < 3$
et $1 < DL_2/DL_3 < 2$

Si l'incinérateur est utilisé normalement, on n'injecte qu'exceptionnellement du liquide sous un débit $DL_1$. Celui-ci est injecté généralement aux débits $DL_2$ et $DL_3$ qui sont du même ordre de grandeur.

L'invention a également pour objet un appareil d'incinération de déchets du type à chargement discontinu et à combustion vive, comprenant un four dans le foyer duquel sont chargés les déchets d'une manière discontinue, caractérisé en ce qu'il comprend une lance d'injection d'oxygène pur et de pulvérisation mécanique ou pneumatique d'un liquide, cette lance débouchant dans le four, et étant placée dans les parois du four, de manière telle que le jet d'oxygène est injecté au moins dans une zone située entre les déchets et environ 20 cm au-dessus de ceux-ci, la lance (3) étant reliée à une source d'oxygène (8) et à une source de liquide sous pression (11), respectivement par l'intermédiaire de dispositifs de réglage de débit (9, 12), tandis que le dispositif (12) de réglage de débit du liquide est relié à une sonde thermique (13) placée dans le four (1).

On décrira, ci-après, à titre d'exemple non limitatif, une forme d'exécution de la présente invention, en référence aux dessins annexés sur lesquels:

Les figures 1A, 1B et 1C sont des vues schématiques des teneurs en monoxyde de carbone des fumées selon l'art antérieur et selon l'invention.

La figure 2 est une vue en coupe verticale et longitudinale schématique d'un appareil d'incinération suivant l'invention.

La figure 3 est une vue en coupe verticale et axiale, à plus grande échelle, du nez de la lance d'injection d'oxygène et de liquide de l'appareil représenté sur la figure 1.

Les figures 4 et 5 sont des diagrammes illustrant la variation de la température dans l'appareil d'incinération en fonction du temps, en l'absence ou en présence de pulvérisation d'eau.

Les figures 6 et 7 sont des diagrammas illustrant la variation des débits d'injection d'oxygène et de pulvérisation d'eau en fonction du temps, au cours de différents cycles d'incinération.

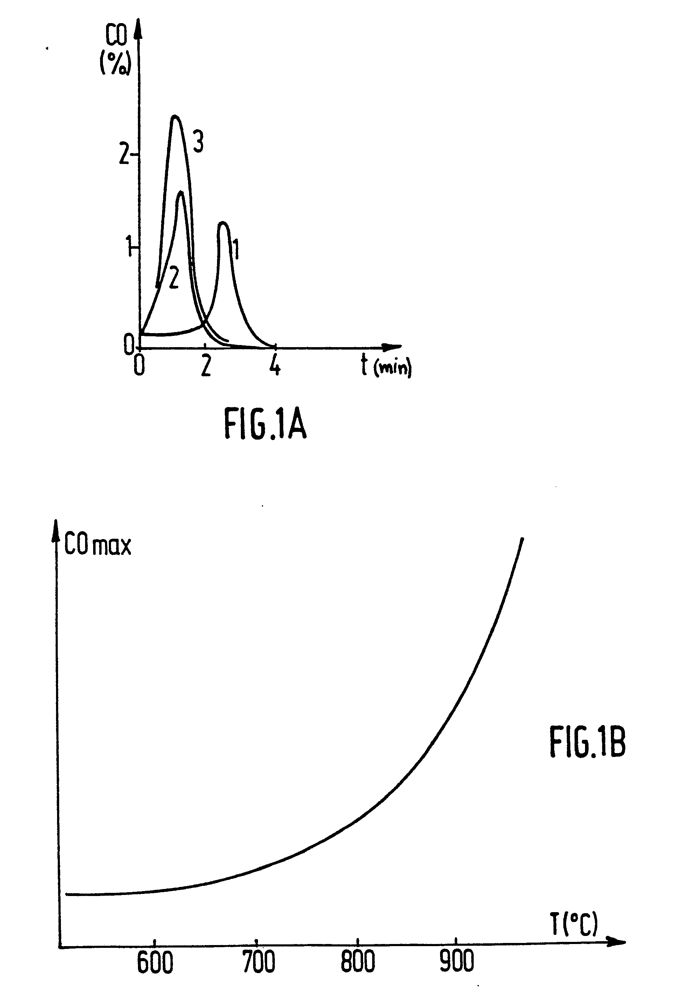

La figure 1A représente trois enregistrements du taux de monoxyde de carbone dans les fumées d'incinérateurs de type connu à chargement discontinu et à combustion vive, en fonction du temps, la charge étant introduite à t = o. Les courbes 1, 2 et 3 sont relatives à des températures du foyer lors de l'introduction des déchets, respectivement de 680°C, 800°C et 900°C.

Ces courbes montrent clairement une augmentation très importante du taux de monoxyde de carbone dans les fumées lorsque la température à l'introduction de la charge augmente (ces trois courbes ont été réalisées pour des charges semblables en quantité et qualité).

La figire 1B est une courbe représentant les variations du taux maximal de monoxyde de carbone dans les fumées en fonction de la température du foyer lors de l'introduction, cette courbe montrant l'augmentation très rapide du taux de monohyde de carbone au-delà de 750°C.

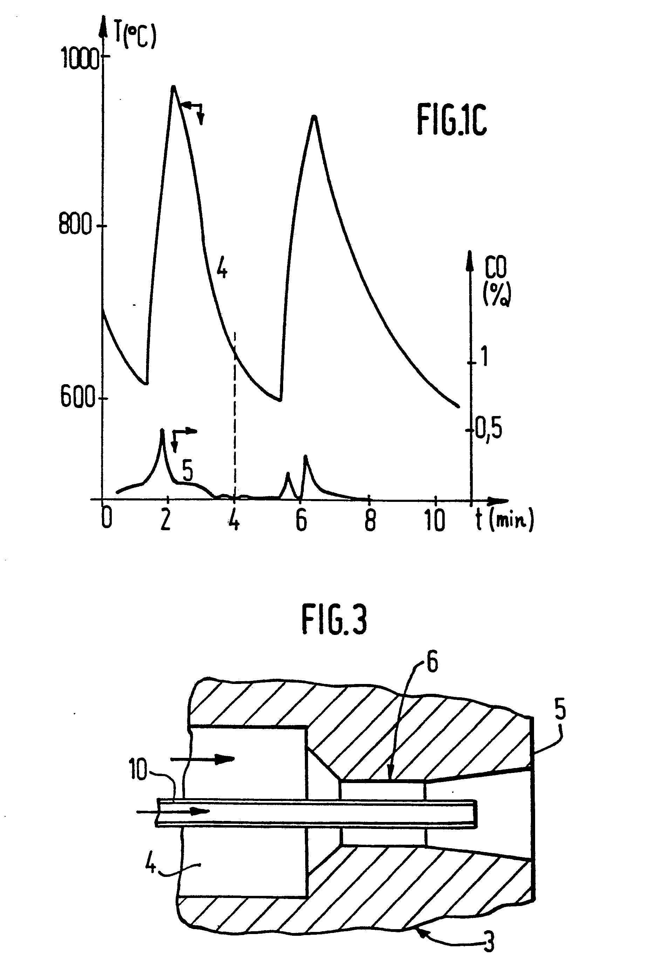

La figure 1C représente sur la courbe 5 les variations du taux de monoxyde de carbone dans les fumées en sortie de four, après application du procédé selon l'invention, une charge étant introduite à t = O et une autre charge à t = 4 min. La courbe 4 représente les variations corrélatives de température du foyer. Les charges sont introduites à une température de foyer de l'ordre de 650°C à 700°C, la température s'abaissant, en 1 min environ, aux environs de 600°C, puis remontant en trente secondes environ, à une température de l'ordre de 900°C à 950°C, température à laquelle une injection d'eau à très grand débit fait baisser rapidement la température. On remarque que le taux de CO maximal se situe environ à mi distance de la portion de courbe 4 entre 600°C et 900°C (aux environs de 800°C), le taux de CO étant déjà redescendu à environ 0,1 % lorsque la température est maximale. En tout état de cause, la concentration en CO n'est pas supérieure à 0,5 % lors qu'elle était supérieure à 1,3 sur la figure 1A (art antérieur).

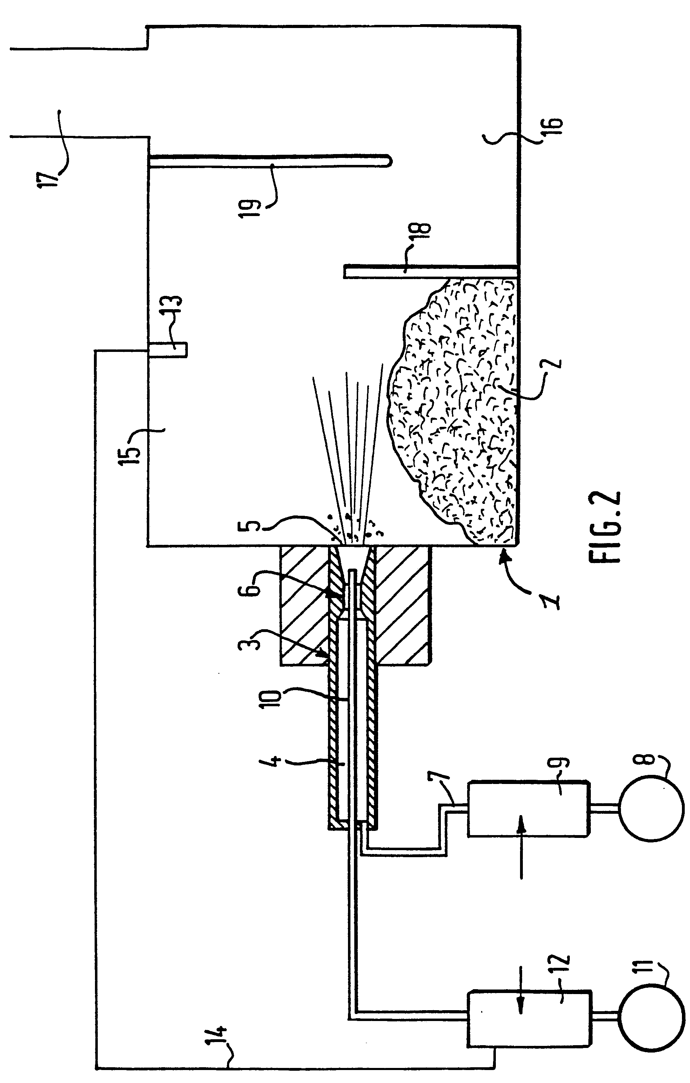

L'appareil d'incinération de déchets de la figure 2 suivant l'invention comprend un four 1, de n'importe quel type connu, pourvu d'au moins un brûleur non représenté et dans lequel sont introduits, d'une manière discontinue, les déchets 2 à brûler. Dans ce four 1 est engagée une lance 3 d'injection d'oxygène pur et de pulvérisation d'un liquide tel que, par exemple, de l'eau. La lance 3 présente un corps cylindrique creux dont l'alésage 4 communique avec la face frontale interne 5 de la lance 3 par l'intermédiaire d'un convergent-divergent 6. L'alésage 4 est relié, par une canalisation 7, à une source d'oxygène pur 8 et sur la canalisation 7 est branché un dispositif 9 de réglage du débit d'oxygène.

La lance 3 contient par ailleurs une canalisation axiale 10 de pulvérisation de liquide, tel que de l'eau, qui s'étend sur presque toute la longueur de la lance 3 et dont l'extrémité se trouve située de préférence dans la partie aval divergente du convergent-divergent 6. Cette canalisation de pulvérisation d'eau 10 communique avec une source d'eau sous pression 11 par l'intermédiaire d'un dispositif de réglage de débit 12. Une sonde thermique (13) permet de mesurer la température T dans le four et commander, par comparaison de la valeur mesurée à une valeur de consigne Tc, l'ouverture de la vanne de liquide lorsque T > Tc et la fermeture lorsque T < Tc. On peut également prévoir plusieurs valeurs de consigne déclenchant des débits de valeurs différentes du liquide (voir ci-après). Les déchets sont placés dans une chambre primaire 15, séparée partiellement d'une chambre secondaire 16 par une paroi 18 formant une chicane avec une seconde paroi 19 et d'où partent les fumées vers un conduit d'évacuation 17. On injecte, durant chaque cycle d'incinération des déchets de l'oxygène pur, qui assure une suroxygénation de l'atmosphère, et pour contrôler l'énergie dissipée dans le four on pulvérise également de l'eau pendant le cycle d'incinération. L'oxygène injecté dans le four présente l'avantage de maintenir une atmosphère chimiquement active autour des déchets en cours de volatilisation, ce qui accélère la combustion. Par ailleurs, le liquide, tel que de l'eau, qui est pulvérisé mécaniquement ou pneumatiquement par l'oxygène, permet de limiter l'échauffement du foyer car en se vaporisant au-dessus de la charge, il agit comme un puits de chaleur vis-à-vis de celle-ci. En outre, le liquide pulvérisé peut permettre, suivant sa nature et les caractéristiques de la pulvérisation, soit le blocage des particules de suie par effet mécanique et, par conséquent, la suppression totale de la pollution, soit l'activation chimique de la combustion par apport d'espèces radioalaires actives. Selon une variante de réalisation, le liquide peut être, de manière très avantageuse, constitué de déchets liquides à détruire.

Les différentes périodes de temps to et t1 et les débits d'injection sont préréglés de façon à optimiser le fonctionnement de l'appareil d'incinération mettant en oeuvre le procédé.

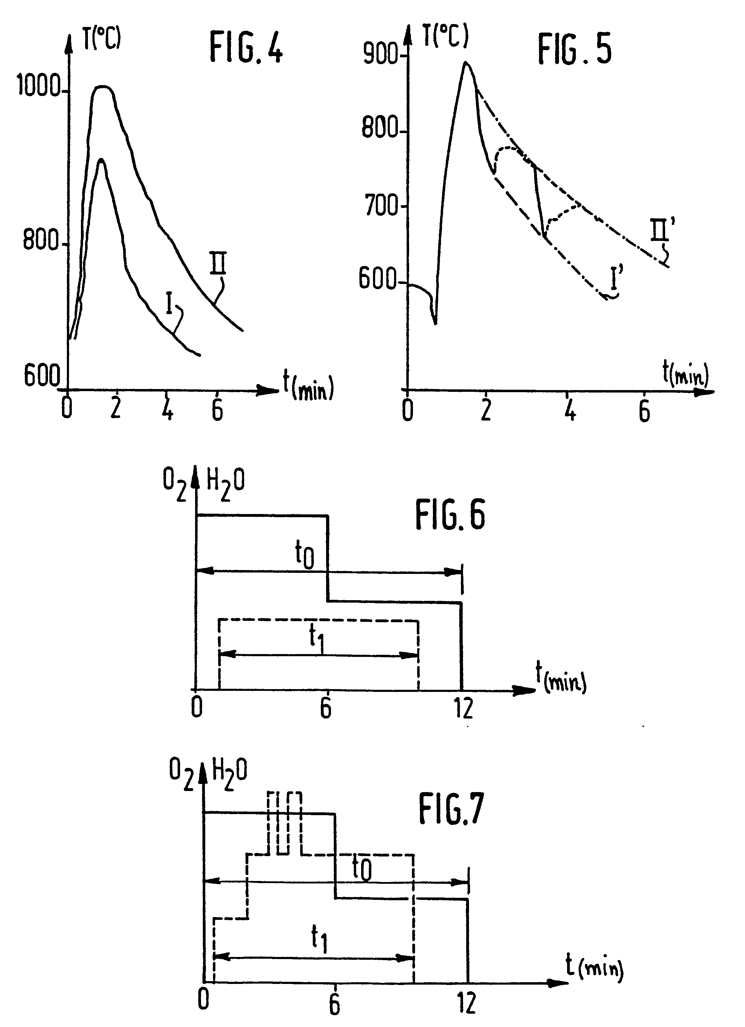

Les figures 4 et 5 représentent la variation de la température T à l'intérieur du four en fonction du temps t, respectivement avec injection d'eau (courbe I) et sans injection d'eau (courbe II). On voit, d'après la figure 4, que le temps nécessaire pour que la température du foyer retombe à son seuil initial d'environ 650°C est de 4 min dans le cas du procédé avec injection d'eau (courbe I) et de 7 min environ dans le cas où n'y a pas d'injection d'eau (courbe II).

La figure 5 illustre plus particulièrement l'influence très rapide de l'eau. En effet, les parties de courbe en trait plein ont été obtenues avec un dopage à l'oxygène et eau, tandis que les parties en pointillés correspondent à des arrêts d'injection d'eau. En extrapolant les courbes obtenues avec injection d'eau (courbe I') et sans injection d'eau (courbe II'), on obtient des résultats tout à fait analogues à ceux illustrés par la figure 4. Dans le cas des courbes des figures 4 et 5, les résultats ont été obtenus avec une charge de 3 kg PCI 16750 kJ/kg (4000 kcal/kg), pour une durée de cycle d'incinération de 6 min, le liquide à injecter étant de l'eau à un débit de 100 l/h et pendant une période de temps $t_1$ égale à la période to d'injection d'oxygène, soit 5 min.

D'autres essais ont montré que l'on peut obtenir les résultats les meilleurs lorsque l'injection d'eau est pilotée par une mesure de température. A cet effet, le dispositif 12 de réglage de débit d'eau est relié à une sonde thermique 13 placée dans le four 1, pour ajuster le débit de l'eau injectée en fonction de la température régnant dans le four. A titre d'exemple, pour une durée de cycle d'incinération de 12 min on a effectué une injection d'oxygène durant une période tO de 12 min et ce en deux phases à savoir une première phase à grand débit pendant 6 min puis une seconde phase à petit débit pendant 6 min, ainsi qu'il est indiqué sur les figures 5 et 6. L'injection d'eau est effectuée pendant une période de temps $t_1$ toujours inférieure ou égale à tO avec les caractéristiques suivantes: très grand débit d'eau (170 l/h) par impulsions de 30 s déclenchées si la température T dans le four dépasse 900°C, grand débit (100 l/h) pour une température du four comprise entre 850°C et 900°C et petit débit (70 l/h) pour une température du four comprise entre 850°C et 750°C.

Les diagrammes des figures 6 et 7 illustrent les cycles obtenus, le cycle représenté sur la figure 6 correspondant à des déchets très faciles à incinérer tandis que celui représenté sur la figure 7 correspond à des déchets très difficiles à incinérer. Les courbes en trait continu correspondent à la variation du débit d'oxygène en fonction du temps tandis que celles en trait interrompu correspondent au debit d'eau pendant chaque cycle.

Bien que, dans les exemples précités de mise en oeuvre du procédé suivant l'invention, on ait utilisé de l'eau en tant que liquide pulvérisé dans le four, il va de soi que l'on peut utiliser n'importe quel autre liquide approprié convenant à une telle application et pouvant ou non réagir chimiquement avec les déchets incinérés.

**Revendications**

1. Procédé d'incinération de déchets dans un four, dans lequel on injecte dans le four un comburant et un liquide tel que de l'eau pulvérisée, caractérisé en ce que l'introduction des déchets dans le four se fait par charges successives et comporte, pour chaque charge de déchets les étapes suivantes:
- abaisser la température du foyer aux environs de 650°C;
- introduire la charge à incinérer;
- injecter de l'oxygène au moins dans la zone située entre la charge et 20 cm au-dessus de celle-ci, de préférence à vitesse sonique, de manière à oxyder immédiatement le carbone et l'hydrogène formés par craquage du gaz de pyrolyse au-dessus de 450°C environ, la présence d'oxygène engendrant très rapidement une montée en température du foyer au-dessus de 750°C, température à partir de laquelle le monoxyde de carbone qui se serait éventuellement formé est immédiatement oxydé sous forme de gaz carbonique, un liquide tel que de l'eau étant vaporisé lorsque la température dans le four devient supérieure à 750°C environ, par pulvérisation à l'aide de l'oxygène de manière, d'une part, à engendrer de l'oxygène actif par craquage thermique et accélérer l'oxydation de C, CO et $H_2$ et d'autre part, à maintenir une température dans le four qui ne devienne pas sensiblement supérieure à environ 850°C, par absorption de chaleur lors de sa vaporisation.

2. Procédé suivant la revendication 1, caractérisé en ce qu'on injecte l'oxygène et/ou le liquide avec un seul et même débit pendant un cycle d'incinération.

3. Procédé suivant la revendication 1, caractérisé en ce qu'on injecte l'oxygène et/ou le liquide avec des débits différents successifs pendant un cycle d'incinération.

4. Procédé suivant l'une des revendications 1 à 3, caractérisé en ce que le liquide injecté est lui-même constitué de déchets à incinérer.

5. Appareil d'incinération de déchets du type à chargement discontinu et à combustion vive, comprenant un four dans le foyer duquel sont chargés les déchets d'une manière discontinue, caractérisé en ce qu'il comprend une lance (3) d'injection d'oxygène pur et de pulvérisation mécanique ou pneumatique d'un liquide, cette lance (3) débouchant dans le four (1), et étant placée dans les parois du four, de manière telle que le jet d'oxygène est injecté au moins dans une zone située entre les déchets et environ 20 cm au-dessus de ceux-ci, la lance (3) étant reliée à une source d'oxygène (8) et à une source de liquide sous pression (11), respectivement par l'intermédiaire de dispositifs de réglage de débit (9, 12), tandis que le dispositif (12) de réglage de débit du liquide asservi par une sonde thermique (13) placée dans le four (1).

6. Appareil suivant la revendication 5, caractérisé en ce que la lance (3) présente un corps cylindrique creux dont l'alésage (4) communique avec la face frontale interne (5) de la lance (3) par l'intermédiaire d'un convergent-divergent (6) et elle contient par ailleurs une canalisation axiale (10) de pulvérisation de liquide, telle que de l'eau, qui s'étend sur presque toute la longueur de la lance (3).

7. Appareil suivant la revendication 6, caractérisé en ce que l'extrémité de la lance (3) est située dans la partie aval divergente du convergent-divergent (6).

**Patentansprüche**

1. Verfahren zur Abfallverbrennung in einem Ofen, bei welchem man in den Ofen ein Verbrennungsmittel und eine Flüssigkeit, wie zerstäubtes Wasser, einspritzt, dadurch gekennzeichnet, daß die Einführung der Abfälle in den Ofen durch aufeinanderfolgende Beschickungen erfolgt und für jede Abfallbeschickung folgende Schritte durchgeführt werden:
- Senkung der Temperatur der Feuerung auf etwa 650° C;
- Einführung der zu verbrennenden Beschickung;
- Einspritzen des Sauerstoffs wenigstens in die Zone, die zwischen der Beschickung und 20 cm oberhalb derselben angeordnet ist, vorzugsweise mit Schallgeschwindigkeit, derart daß der Kohlenstoff und der Wasserstoff, die durch Kracken von Pyrolysegasen oberhalb etwa 450° C gebildet wurden, unmittelbar oxidiert werden, wobei die Gegenwart von Sauerstoff sehr rasch ein Ansteigen der Temperatur der Feuerung oberhalb 750° C ergibt, eine Temperatur, von der an das Kohlenmonoxid, welches sich eventuell gebildet hat, unmittelbar zu Kohlendioxid oxidiert wird, und wobei eine Flüssigkeit, wie Wasser, wenn die Temperatur in dem Ofen über 750° C geht, durch Zerstäubung mit Hilfe des Sauerstoffes derart verdampft wird, daß einerseits aktiver Sauerstoff durch thermisches Kracken erzeugt und die Oxidation von C, CO und $H_2$ beschleunigt wird und andererseits in dem Ofen eine Temperatur, die nicht wesentlich über ungefähr 850° C hinausgeht, durch Wärmeabsorption während seiner Verdampfung gehalten wird.

2. Verfahren nach Anspruch 1, dadurch gekennzeichnet, daß man den Sauerstoff und/oder die Flüssigkeit mit ein und demselben Durchsatz während eines Verbrennungszyklus einspritzt.

3. Verfahren nach Anspruch 1, dadurch gekennzeichnet, daß man den Sauerstoff und/oder die Flüssigkeit mit verschiedenen aufeinanderfolgenden Durchsätzen während eines Verbrennungszyklus einspritzt.

4. Verfahren nach einem der Ansprüche 1 bis 3, dadurch gekennzeichnet, daß die eingespritzte Flüssigkeit selbst aus zu verbrennenden Abfällen besteht.

5. Vorrichtung zur Abfallverbrennung vom Typ mit diskontinuierlicher Beschickung und heftiger Verbrennung mit einem Ofen, in dessen Feuerung die Abfälle in diskontinuierlicher Weise eingespeist werden, dadurch gekennzeichnet, daß sie eine Lanze (3) zum Einspritzen von reinem Sauerstoff und zur mechanischen oder pneumatischen Zerstäubung einer Flüssigkeit aufweist, wobei diese Lanze (3) in den Ofen (1) mündet und in den Wänden des Ofens derart angeordnet ist, daß der Sauerstoffstrahl wenigstens in eine Zone, die zwischen den Beschickungen und etwa 20 cm oberhalb derselben liegt, eingespritzt wird und wobei die Lanze (3) mit einer Sauertoffquelle (8) und einer Quelle für Flüssigkeit unter Druck (11), jeweils über Einrichtungen zur Steuerung des Durchsatzes (9, 12) verbunden ist, während die Einrichtung (12) zur Steuerung des Flüssigkeitsdurchsatzes durch eine Wärmesonde (13), die in dem Ofen (1) angeordnet ist, gesteuert wird.

6. Vorrichtung nach Anspruch 5, dadurch gekennzeichnet, daß die Lanze (3) einen zylindrischen hohlen Körper darstellt, dessen Bohrung (4) in Verbindung mit der vorderen inneren Fläche (5) der Lanze (3) über ein konvergierendes-divergierendes Teil (6) steht und sie andererseits eine Axialleitung (10) zur Zerstäubung von Flüssigkeit, wie Wasser, enthält, die sich über fast die gesamte Länge der Lanze (3) erstreckt.

7. Vorrichtung nach Anspruch 6, dadurch gekennzeichnet, daß das Ende der Lanze (3) in dem abstromseitigen divergierenden Teil des konvergierend-divergierenden Teils (6) angeordnet ist.

**Claims**

1. Process for incinerating waste products in a furnace in which a comburant and sprayed water are injected into the furnace, characterized in that the introduction of the waste products in the furnace is effected by successive charges and comprises, for each charge of waste products, the following steps:
- lowering the temperature of the hearth to around 650 C;
- introducing the charge to be incinerated;
- injecting oxygen at least in the zone located between the charge and 20 cm above the latter, preferably at sonic speed so as to immediately oxidize the carbon and the hydrogen formed by cracking the pyrolysis gas above about 450° C, the presence of oxygen very rapidly producing a rise in temperature of the hearth above 750° C, beyond which temperature any carbon monoxide which might be formed is immediately oxidized in the form of carbon dioxide, a liquid such as water being vaporized when the temperature in the furnace becomes higher than about 750° C, by spraying by means of oxygen in such a way as, on the one hand to produce active oxygen by thermal cracking and accelerate the oxydation of C, CO and H and, on the other hand, to maintain a temperature in the furnace which does not become substantially higher than about 850°C, by absorption of heat upon its vaporization.

2. Process according to claim 1, characterized in that the oxygen and/or the liquid is injected with one and the same rate of flow during an incinerating cycle.

3. Process according to claim.1, characterized in that the oxygen and/or the liquid is injected with different successive rates of flow during an incinerating cycle.

4. Process according to any one of the claims 1 to 3, characterized in that the liquid injected is itself formed by waste products to be incinerated.

5. Apparatus for incinerating waste products of the type employing a discontinuous charging and quick combustion, comprising a furnace in the hearth of which are charged the waste products in a discontinuous manner, characterized in that it comprises a nozzle (3) for injecting pure oxygen and pneumatically or mechanically spraying a liquid, said nozzle (3) opening into the furnace (1) and being placed in the walls of the furnace in such manner that the jet of oxygen is injected at least in a zone located between the waste products and about 20 cm above the waste products, the nozzle (3) being connected to a source of oxygen (8) and to a source of liquid under pressure (11) respectively through flow-regulating devices (9, 12), while the device (12) for regulating the flow of the liquid is a thermal probe (13) placed in the furnace (1).

6. Apparatus according to claim 5, characterized in that the nozzle (3) comprises a hollow cylindrical body the bore (4) of which communicates with the inner front surface (5) of the nozzle (3) through a convergent-divergent (6) and it further contains an axial pipe (10) for spraying liquid, such as water, which extends through nearly the entire length of the nozzle (3).

7. Apparatus according to claim 6, characterized in that the end of the nozzle (3) is located in the divergent downstream part of the convergent-divergent (6).

FIG.1A

FIG.1B

FIG.1C

FIG.3

FIG.2

FIG.4

FIG.5

FIG.6

FIG.7